# EUROPEAN PATENT APPLICATION

(11) **EP 2 789 823 A1**
(43) Date of publication of application: **15.10.2014**
(21) Application number: 14155746.2
(22) Date of filing: 19.02.2014
(51) Int. Cl.: F01N 9/00, A01D 7/00, B60W 30/18, F01N 3/025

(54) **System and method for preventing the cleaning of a diesel particulate filter**

(30) Priority: 05.03.2013 US 201313785814
(71) Applicant: DEERE & COMPANY, Moline, Illinois 61265-8098 (US)
(72) Inventor: Pederson, Christopher, East Moline, IL Illinois 61244 (US); Heinecke, Bradley D, East Moline, IL Illinois 61244 (US); Maas, Brian J, Bettendorf, IA Iowa 52722 (US); Long, Greg R, Morrison, IL Illinois 61270 (US); Branch, Matthew G, Viola, IL Illinois 61486 (US); Kozicki, Andrzej, Milan, IL Illinois 61264 (US); Randall, Lee W, Durant, IA Iowa 52747 (US)
(74) Representative: Holst, Sönke

(57) **Abstract**

A system for preventing the cleaning of the diesel particulate filter (116) comprises an electronic control unit (200) coupled to a proximity sensor (122), the electronic control unit (200) being configured to monitor the proximity sensor (122) and to determine that there is a predetermined distance between the proximity sensor and an adjacent structure (124) before the electronic control unit (200) will regenerate the diesel particulate filter (116). A method for preventing the cleaning of the diesel particulate filter (116) comprises the steps of electronically monitoring a proximity sensor to determine a distance from the proximity sensor to an adjacent structure, electronically comparing the distance to a threshold distance, and electronically preventing the cleaning of the diesel particulate filter (116) when the distances less than the threshold distance.

## Description

### Field

The invention relates to diesel particulate filters. More particularly, it relates to systems for preventing the cleaning of a diesel particulate filter.

### Background

Diesel particulate filters are provided on diesel engines to reduce the emissions of the engines. The diesel particulate filters filter out soot from the exhaust gas exiting the engine.

Over time, particulate matter (often called "soot") builds up inside the diesel particulate filters. It must be periodically removed or the diesel particulate filter will be plugged. In order to remove the sort, the diesel particulate filter is operated at an elevated temperature high enough to combust the soot. This cleaning process is commonly called "regeneration".

There are a variety of methods for regenerating or cleaning a diesel particulate filter, the most common being injecting fuel into a flow of exhaust gas leading into the diesel particulate filter then using a catalytic converter to oxidize the fuel and heat the exhaust gas, or combusting fuel and adding the hot combustion byproducts to the flow of exhaust gas.

During normal engine operation the exhaust gas may leave the vehicle at a relatively low temperature, such as 120°F.

During regeneration, however, the exhaust gas may be raised to a temperature from 600-1200°F in order to completely combust the soot in the diesel particulate filter. There is a risk that the elevated exhaust gas temperature may cause structures adjacent to the exhaust outlet of the vehicle to be damaged.

What is needed, therefore is a system for preventing the cleaning of a diesel particulate filter of a vehicle when the vehicle is too close to another structure.

It is an object of this invention to provide such a system.

### Summary

In accordance with one arrangement, a vehicle comprises ground engaging structures for moving the vehicle over the ground, a frame coupled to the ground engaging structures, a diesel engine further comprising a diesel particulate filter, wherein the diesel engine is mounted on the frame, an exhaust pipe coupled to and extending from the diesel engine, the exhaust pipe having an outlet configured to released a stream of exhaust gas from the engine into the environment, an electronic control unit (ECU) coupled to the engine to control the regeneration of the diesel particulate filter, and a proximity sensor coupled to the ECU to indicate a distance between the vehicle and an adjacent structure, wherein the ECU is configured to prevent the regeneration of the diesel particulate filter when the proximity sensor indicates the vehicle is within a predetermined range of the adjacent structure.

In accordance with another arrangement, a system for preventing the cleaning of a diesel particulate filter comprises an electronic control unit; a proximity sensor; a fuel injector coupled to the electronic control unit and coupled to an exhaust gas conduit upstream of the diesel particulate filter; wherein the electronic control unit is configured to read the proximity sensor and to prevent the fuel injector from adding fuel to the exhaust gas conduit until the proximity sensor indicates at least a threshold distance to an adjacent structure.

The electronic control unit may comprise a digital microprocessor.

The fuel injector may be configured to inject fuel into a flow of exhaust gas upstream of the diesel particulate filter.

The proximity sensor may comprise an ultrasonic sensor.

The electronic control unit may be configured to stop an ongoing diesel particulate filter cleaning process.

The electronic control unit may be configured to stop the ongoing diesel particulate filter cleaning process by stopping the fuel injector from adding further fuel to the exhaust gas conduit.

In accordance with another arrangement, an agricultural harvester (100 may comprise a self-propelled agricultural harvesting vehicle further comprising a frame, a diesel engine supported on the frame and the system described herein for preventing the cleaning of the diesel particulate filter.

The proximity sensor may be disposed adjacent to an exhaust pipe disposed to carry exhaust gas from the diesel engine away from the agricultural harvester.

The proximity sensor may comprise an ultrasonic sensor.

The proximity sensor may be disposed at a rear of the agricultural harvester.

In accordance with another arrangement, a method for preventing the cleaning of a diesel particulate filter on an agricultural vehicle having a proximity sensor comprises electronically monitoring the proximity sensor to determine a distance from the proximity sensor to an adjacent structure; electronically comparing the distance to a threshold distance; electronically peventing the cleaning of the diesel particulate filter when the distance is less than the threshold distance.

The step of electronically preventing the cleaning of the diesel particulate filter (116 when the distance is less than the threshold distance may comprise the step of preventing a fuel injector from injecting fuel into a flow of exhaust gas into the diesel particulate filter.

### Brief Description of the Drawings

Figure 1 shows an agricultural combine having an engine, a diesel particulate filter, and an exhaust gas outlet.
Figure 2 is a schematic diagram of the system to control the regeneration of the diesel particulate filter.
Figure 3 is a flowchart showing the steps performed by the ECU of the system to prevent the cleaning of the diesel particulate filter.
Figure 4 is a flowchart showing the steps performed by the ECU of the system to terminate the cleaning of the diesel particulate filter.

### Detailed Description

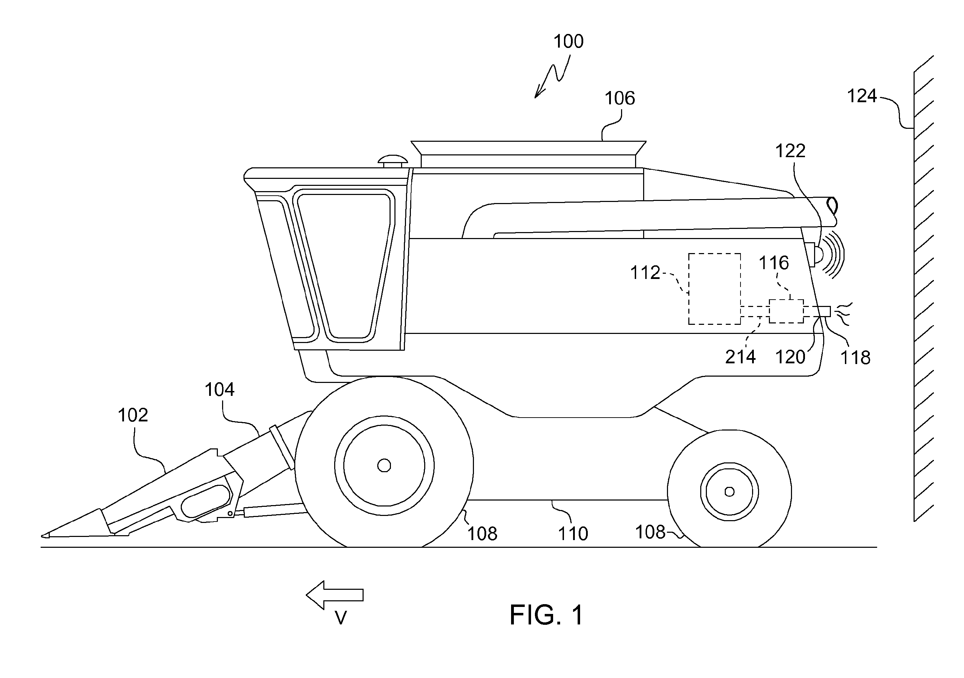

In the discussion below, the terms "front", "forward", "in front of", and variants thereof refer to the forward direction of travel of the vehicle as it travels through the field harvesting crops. This direction of travel as indicated by the letter "V" in figure 1.

In the discussion below, the terms "rear", "rearward", "behind", and variants thereof refer to a direction opposite to the forward direction of travel.

"Upstream" and ""downstream" as those terms are used herein relate to the flow of exhaust gas from the cylinders of the diesel engine 112.

Referring now to Figure 1, an agricultural harvester 100 is shown. The agricultural harvester comprises a harvesting head 102 which is mounted on a feederhouse 104 that is supported on the front of a self-propelled agricultural harvesting vehicle 106.

The self-propelled agricultural harvesting vehicle 106 is supported on a plurality of wheels 108 that engage the ground and support the agricultural harvester 100 for travel over the ground harvesting crops. The wheels are connected to a frame 110 of the self-propelled agricultural harvesting vehicle 106. The agricultural harvester 100 travels through the field in the direction "V" as it harvests crop.

A diesel engine 112 is fixed to the frame 110 and is disposed in an upper rear portion of the self-propelled agricultural harvesting vehicle 106.

A diesel particulate filter 116 is disposed to receive gaseous diesel engine combustion byproducts ("engine exhaust" or "exhaust gas") that exit the diesel engine 112. The exhaust gas leaving the diesel particulate filter 116 travels through an exhaust pipe 118 and through an aperture 120 in the self-propelled agricultural harvesting vehicle. The outlet of the exhaust pipe 118 extends from the rear of the self-propelled agricultural harvesting vehicle 106 and conveys the exhaust gas away from the agricultural harvester 100.

The diesel particulate filter 116 may comprise a catalytic converter (such as a diesel oxidizer catalyst or "DOC") that is disposed upstream of the diesel particulate filter element in order to oxidize raw fuel in the flow of exhaust gas from the engine to the filter element of the diesel particulate filter 116. For diesel particulate filters with a catalytic converter, the un-combusted fuel in the exhaust gas flow is oxidized in the catalytic converter with the concomitant release of heat energy, and elevation of the exhaust gas temperature.

A proximity sensor 122 is disposed adjacent to the exhaust pipe of the diesel engine 112 which (in this case) is at the rear of the self-propelled agricultural harvesting vehicle 106 to sense the proximity of the self-propelled agricultural harvesting vehicle 106 to any adjacent structure 124. A typical adjacent structure 124 (such as that shown here) is a barn, a shed, hay bales or crop storage bins.

The proximity sensor 122 may comprise one or more ultrasonic sensor transmitters and receivers. These ultrasonic transmitters and receivers may be pointed in a variety of directions such that they sense the proximity of the self-propelled agricultural harvesting vehicle 106 to a plurality of locations on the adjacent structure 124.

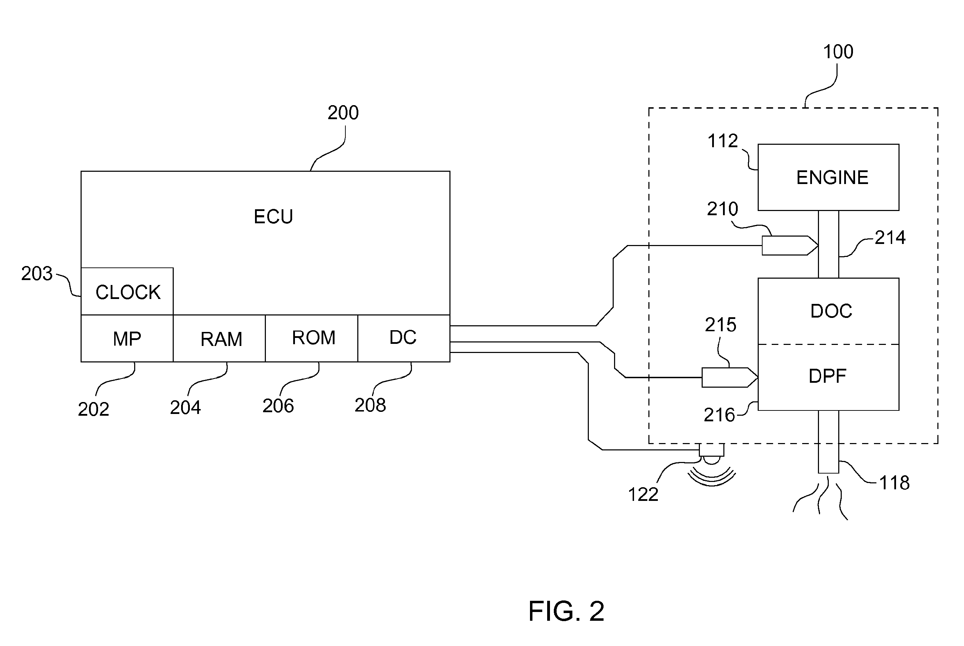

In Figure 2, an electronic control unit (ECU) 200 includes a microprocessor 202, a clock circuit 203, a RAM or random-access memory 204, a ROM or read-only memory 206, and a driver circuit 208. The microprocessor 202 is configured to execute a series of digital program statements that are stored in read-only memory 206. The microprocessor 202 is configured to save working values in random-access memory 204 that it calculates as it executes the series of digital program statements.

In one arrangement, the ECU 200 of Figure 2 represents a single ECU. In another arrangement, the ECU 200 of Figure 2 represents a plurality of ECUs that are networked together, each of the ECUs in the network providing some of the functions described herein and communicating the results of those functions to others ECUs of the network of ECUs.

The ECU 200 is coupled to a fuel injector 210. The fuel injector 210 is disposed to inject fuel into a flow of exhaust gas carried leaving the cylinders of the diesel engine 112 and going to the diesel particulate filter 116.

In one arrangement, the fuel injector 210 is disposed to inject fuel into the exhaust gas in the diesel engine 112 itself.

In another arrangement the fuel injector 210 is disposed to inject fuel into an exhaust gas conduit 214 connecting the diesel engine 112 to the diesel particulate filter 116.

In another arrangement, the fuel injector 210 is disposed to inject fuel into the diesel particulate filter 116 either at, or slightly upstream of the working element of the diesel particulate filter 116.

All of these arrangements are expressed schematically in Figure 2 which shows the fuel injector 210 located between the engine and the DPF. In all of these aforementioned arrangements, the fuel is introduced at a location such that its combustion byproducts can be combined with the existing exhaust gas to elevate the temperature of the combined exhaust gas flow prior to the exhaust gas passing through the diesel particulate filter 116.

These different locations are expressed schematically in Figure 2 by the fuel injector 210 coupled to the exhaust gas conduit 214. In another arrangement, the fuel injector 210 comprises a means for combusting the fuel such as a burner, combustor, or oxidizer. The ECU 200 is coupled to a pressure sensor 215 that is disposed to sense an exhaust gas pressure drop across at least a portion of the filter element of the diesel particulate filter 116.

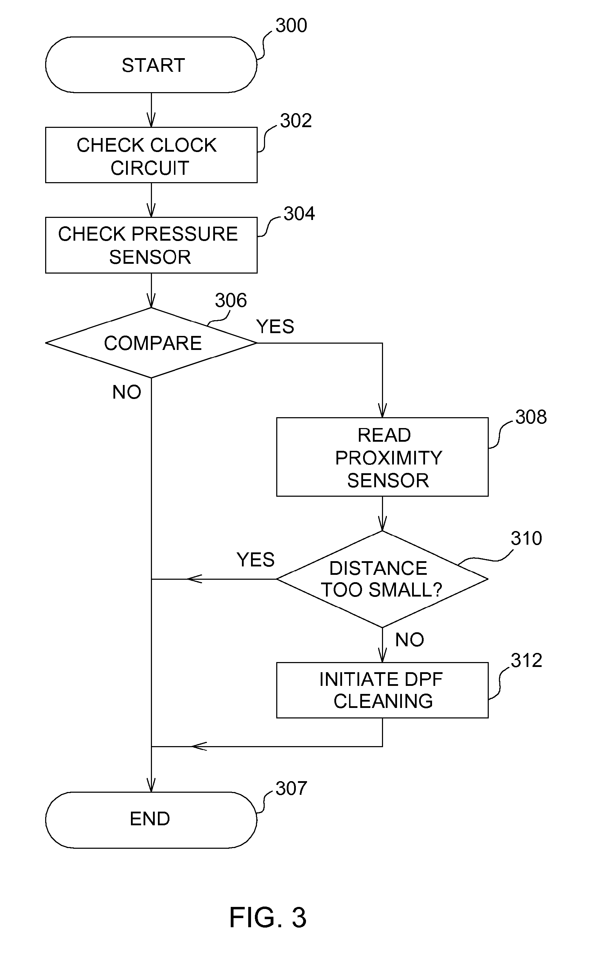

In Figure 3 a flowchart of the process followed by the ECU 200 is shown. This process is defined by a sequence of digital computer instructions stored in the read-only memory 206.

In step 300, the process starts.

In step 302 the ECU 200 is programmed to read the clock circuit 203 to determine how long the engine has been operating since the last time the diesel particulate filter 116 has been thermally recycled and thus how long soot has been accumulating in the diesel particulate filter 116.

In step 304, the ECU is programmed to read the pressure sensor 215 to determine the degree to which soot has obstructed the diesel particulate filter 116. The pressure drop across the diesel particulate filter 116 is proportional to the amount of soot contamination of the diesel particulate filter 116.

In step 306, the ECU is programmed to compare the elapsed engine operating time (which the ECU determined in step 302) and the degree to which the diesel particulate filter 116 is obstructed (which the ECU determined in step 304 by determining the pressure difference across the diesel particulate filter 116) against threshold values of elapsed engine operating time and pressure drop across the diesel particulate filter 116. If the ECU 200 in step 306 determines that neither the elapsed engine operating time (step 302) nor the pressure drop across the diesel particulate filter 116 (step 304) have reached a predetermined threshold, the ECU 200 the process continues to step 307 and terminates.

If the ECU 200 in step 306 determines that either the elapsed engine operating time (step 302) or the pressure drop across the diesel particulate filter 116 (step 304) has reached a predetermined threshold, the ECU 200 branches to step 308, and reads the proximity sensor 122.

After the ECU 200 executes step 308, it then continues to step 310 in which it compares the distance indicated by the proximity sensor 122 with a threshold distance previously stored in ROM 306. The threshold distance previously stored in ROM 306 indicates a minimum distance between the agricultural harvester 100 and the adjacent structure 124 within which the ECU 200 will not permit the diesel particulate filter 116 to be thermally recycled.

If the ECU 200 determines in step 310 that the adjacent structure 124 is too close to the agricultural harvester 100 (i.e. the signal generated by the proximity sensor indicates a distance that is smaller than the threshold distance), the ECU 200 continues to step 307 and terminates.

Alternatively, if the ECU 200 determines in step 310 that the adjacent structure 124 is sufficiently far from the agricultural harvester 100 (i.e. the signal generated by the proximity sensor indicates a distance that is greater than the threshold distance) then the ECU 200 continues to step 312.

In step 312, the ECU 200 is programmed to command the fuel injector 210 to inject fuel into the exhaust gas produced in the engine before the exhaust gas reaches the diesel particulate filter 116, at which point the ECU 200 continues to step 307 and terminates. The steps illustrated in Figure 3 are performed at regularly scheduled intervals by the ECU 200.

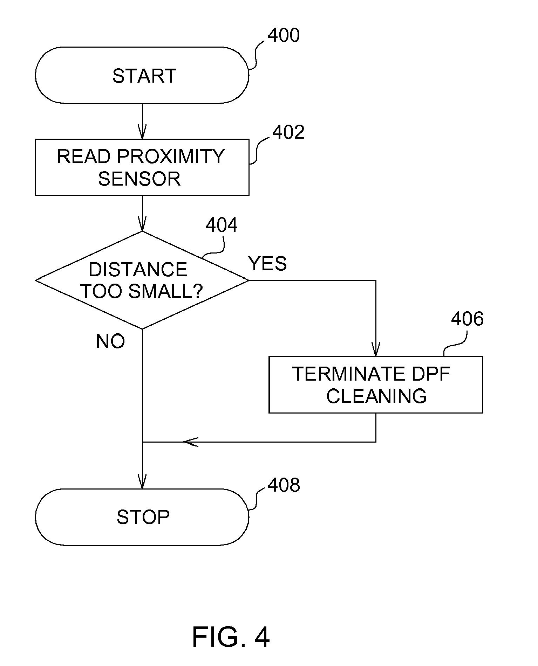

Figure 4 illustrates a process performed by ECU 200 whenever the DPF is being cleaned.

In step 400, the process starts.

In step 402, the ECU 200 reads the proximity sensor 122.

In step 404, the ECU 200 compares the distance indicated by the proximity sensor 122 with a second threshold distance previously stored in ROM 306. The second threshold distance may be the same as or different from the threshold distance discussed above. If the agricultural harvester 100 is within the second threshold distance as determined in step 404, the ECU 200 continues to step 406 and terminates the DPF cleaning process. In step 406, the ECU 200 turns the fuel injector 210 off and thereby stops the fuel injector 210 from injecting fuel into the exhaust gas.

If the agricultural harvester 100 is not within the second threshold distance, the ECU continues to step 408 and terminates the DPF cleaning process.

ECU 200 is programmed to perform the steps illustrated in Figure 4 at regularly scheduled intervals during the DPF cleaning process, and thus to terminate an ongoing DPF cleaning process whenever the agricultural harvester 100 comes too close to the adjacent structure 124.

The description and figures herein are provided to illustrate at least one concrete example of how the invention can be practiced. The invention itself, however, is not limited to being practiced in the particular way always described herein. The claims (below) define the invention and encompass more than the specific examples provided herein.

## Claims

1. A system for preventing the cleaning of a diesel particulate filter (116) comprising:
an electronic control unit (200);
a proximity sensor (122)
a fuel injector (210) coupled to the electronic control unit (200) and coupled to an exhaust gas conduit (214) upstream of the diesel particulate filter (116); and
wherein the electronic control unit (200) is configured to read the proximity sensor (122) and to prevent the fuel injector (210) from adding fuel to the exhaust gas conduit (214) until the proximity sensor (122) indicates at least a threshold distance to an adjacent structure (124).

2. The system for preventing the cleaning of a diesel particulate filter (116) of Claim 1, wherein the electronic control unit (200) comprises a digital microprocessor (202).

3. The system for preventing the cleaning of a diesel particulate filter (116) of Claim 1, wherein the fuel injector (210) is configured to inject fuel into a flow of exhaust gas upstream of the diesel particulate filter (116).

4. The system for preventing the cleaning of a diesel particulate filter of Claim 1, wherein the proximity sensor (122) comprises an ultrasonic sensor.

5. The system for preventing the cleaning of a diesel particulate filter (116) of Claim 4, wherein the electronic control unit (200) is configured to stop an ongoing diesel particulate filter (116) cleaning process.

6. The system for preventing the cleaning of the diesel particulate filter (116) of Claim 5, wherein the electronic control unit (200) is configured to stop the ongoing diesel particulate filter (116) cleaning process by stopping the fuel injector (210) from adding further fuel to the exhaust gas conduit (214).

7. An agricultural harvester (100), comprising a self-propelled agricultural harvesting vehicle (106) further comprising a frame (110), a diesel engine (112) supported on the frame (110), the agricultural harvester (100) further comprising the system for preventing the cleaning of the diesel particulate filter of Claim 1.

8. The agricultural harvester (100) of Claim 7, wherein the proximity sensor (122) is disposed adjacent to an exhaust pipe (118) disposed to carry exhaust gas from the diesel engine (112) away from the agricultural harvester (100).

9. The agricultural harvester (100) of Claim 7, wherein the proximity sensor (122) comprises an ultrasonic sensor.

10. The agricultural harvester (100) of Claim 9, wherein the proximity sensor (122) is disposed at a rear of the agricultural harvester (100).

11. A method for preventing the cleaning of a diesel particulate filter (116) on an agricultural vehicle having a proximity sensor (122) mounted thereon, the method comprising the steps of:
electronically monitoring the proximity sensor (122) to determine a distance from the proximity sensor (122) to an adjacent structure (124);
electronically comparing the distance to a threshold distance; and
electronically preventing the cleaning of the diesel particulate filter (116) when the distance is less than the threshold distance.

12. The method of Claim 11, wherein the step of electronically preventing the cleaning of the diesel particulate filter (116) when the distance is less than the threshold distance comprises the step of preventing a fuel injector (210) from injecting fuel into a flow of exhaust gas into the diesel particulate filter (116).
